# EUROPÄISCHE PATENTSCHRIFT

(11) **EP 2 774 819 B1**
(45) Veröffentlichungstag und Bekanntmachung des Hinweises auf die Patenterteilung: **18.12.2019**
(21) Anmeldenummer: 14155779.3
(22) Anmeldetag: 19.02.2014
(51) Int. Cl.: B60S 1/04, B62D 25/08

(54) **Vorrichtung zum Befestigen einer Wischeranlage**
Device for fixing a windshield wiper assembly
Dispositif de fixation d'un système d'essuie-glace

(30) Priorität: 09.03.2013 DE 102013004133
(43) Veröffentlichungstag der Anmeldung: 10.09.2014
(73) Patentinhaber: Volkswagen Aktiengesellschaft, 38440 Wolfsburg (DE)
(72) Erfinder: Münch, Wolf Alexander, 27793 Wildeshausen (DE); Kulinna, Hans-Jürgen, 29392 Wesendorf (DE); Junggebauer, Jens, 38104 Braunschweig (DE)

(56) Entgegenhaltungen:
- DE-A1- 10 232 329
- DE-A1-102009 041 387
- DE-A1-102010 038 857
- JP-A- 2008 174 008
- JP-U- H0 174 954

## Beschreibung

Die Erfindung betrifft eine Vorrichtung zum Befestigen einer Wischeranlage, insbesondere eines Wischeranlagenantriebs, an einem Fahrzeug, insbesondere Kraftfahrzeug, mit mindestens einem Befestigungselement und mit mindestens einem Federbeindom, wobei die Wischeranlage durch das Befestigungselement an einem Kuppelabschnitt des Federbeindoms befestigt ist.

Vorrichtungen zum Befestigen einer Wischeranlage an einem Fahrzeug sind aus dem Stand der Technik bekannt. Die heutigen Anforderungen bezüglich der Fahrzeugsicherheit verlangen eine nachgiebige Struktur unterhalb eines Scheibenquerträgers, um im Falle eines Fußgängercrashes die sogenannte HIC-Belastung (Integral der Kopfbeschleunigung über die Zeit) zu minimieren. Bauraumbedingte Restriktionen lassen jedoch oftmals keine Verlagerung der Anbindung der Wischeranlage, insbesondere des Wischeranlagenantriebs, in eine von der Deformation nicht betroffene Region zu. Weiterhin sind herkömmliche Befestigungen der Wischeranlage auf einem Boden eines Wasserkastens bei vielen Fahrzeugen aufgrund der jeweiligen Scheibenlage oft nicht umsetzbar.

Aus der DE 10 2009 005 942 A1 ist eine Vorrichtung zum Befestigen einer Wischeranlage bekannt, bei welcher ein zusätzliches Befestigungselement genutzt wird. Dieses ist dabei als Federbeindomstrebe ausgebildet, die einendig an ein einem Kuppelabschnitt eines Federbeindoms und anderendig an einem Querträger der Fahrzeugkarosserie befestigt ist. Die Domstrebe weist dabei Befestigungsstellen zur Anbindung der Wischeranlage beziehungsweise des Wischeranlagenantriebs auf. Die Domstreben sind dabei an dem Federbeindom verschraubt, wobei sich im Crashfall die Domstreben von dem jeweiligen Federbeindom lösen und die Verschraubung zerstört wird.

Nachteilig bei dieser Lösung ist insbesondere, dass durch die Domstreben Vibrationen der Wischeranlage direkt auf den Querträger übertragen werden, was zu einer unerwünschten Geräuschentwicklung im Fahrzeuginnenraum führen kann.

Aus der Offenlegungsschrift JP H0174954 U ist eine weitere Anordnung einer Wischeranlage an einem Kraftfahrzeug bekannt, bei welcher die Wischeranlage durch ein Befestigungselement an einem Federbeindom des Kraftfahrzeugs befestigt ist.

Der Erfindung liegt die Aufgabe zugrunde, eine Anordnung zum Befestigen einer Wischeranlage, insbesondere eines Wischeranlagenantriebs, an einem Fahrzeug zu schaffen, die insbesondere ein verbessertes Geräuschverhalten gewährleistet.

Die der Erfindung zugrunde liegende Aufgabe wird mit einer Anordnung mit den Merkmalen des Anspruchs 1 gelöst. Die erfindungsgemäße Vorrichtung hat den Vorteil, dass Vibrationen der Wischeranlage und insbesondere des Wischeranlagenantriebs nicht auf einen Fahrzeugquerträger, insbesondere den Scheibenquerträger, übertragen werden, sondern allein dem Federbeindom zukommen. Dieser ist aufgrund seiner üblicherweise hohen Masse dazu in der Lage, die Vibrationen der Wischeranlage gut abzudämpfen und somit eine vibrationsbedingte Geräuschentwicklung in dem Fahrzeug zu vermeiden. Erfindungsgemäß ist hierzu vorgesehen, dass das Befestigungselement nur mit dem Federbeindom und mit der Wischeranlage verbunden ist. Eine Anbindung des Befestigungselements an einen Querträger des Fahrzeugs beziehungsweise an ein weiteres Karosseriebestandteil des Fahrzeugs unterbleibt, so dass keine Vibrationen von der Wischeranlage beziehungsweise von dem Wischeranlagenantrieb auf einen Querträger oder dergleichen übertragen werden können. Durch die alleinige Anbindung des Befestigungselementes an den Federbeindom wird gewährleistet, dass die Vibrationen von dem Federbeindom aufgenommen werden.

Gemäß einer vorteilhaften Weiterbildung der Erfindung ist vorgesehen, dass das Befestigungselement an einem Kuppelabschnitt des Federbeindoms angeschweißt ist. Das Befestigungselement ist somit stoffschlüssig mit dem Federbeindom verbunden. Durch die Anbindung an den Kuppelabschnitt befindet sich das Befestigungselement außerdem am freien Ende des Federbeindoms (in axialer Richtung gesehen), so dass es von oben leicht erreichbar ist. Durch die angeschweißte Befestigung an dem Kuppelabschnitt wird somit zum einen eine feste Verbindung und zum anderen eine gute Erreichbarkeit gewährleistet.

Erfindungsgemäß ist vorgesehen, dass der Federbeindom in einem Kuppelabschnitt eine insbesondere mittige Domöffnung aufweist, und dass das Befestigungselement bereichsweise auf dem Kuppelabschnitt aufliegt und bereichsweise in der Domöffnung angeordnet ist. Das Befestigungselement ist somit seitlich formschlüssig an dem Federbeindom in der Domöffnung gehalten, wodurch eine hohe Belastbarkeit des Befestigungselements gewährleistet wird. Durch die Nutzung einer ohnehin üblicherweise oft vorgesehenen Domöffnung zur Anordnung und Befestigung eines

Befestigungselementes werden dabei außerdem Vorteile in Bezug auf Kosten und Bauraum erzielt. Besonders bevorzugt weist das Befestigungselement dazu einen kreisförmigen Abschnitt auf, der in die insbesondere kreisförmig ausgebildete Domöffnung hineinragt, wobei der Außendurchmesser des zylinderförmigen Abschnitts zumindest im Wesentlichen dem Innendurchmesser der Domöffnung entspricht, um eine zumindest im Wesentlichen spielfreie Lagerung des Befestigungselementes in der Domöffnung zu gewährleisten. Erfindungsgemäß ist weiterhin vorgesehen, dass das Befestigungselement wenigstens ein Rastelement aufweist, welches den Kuppelabschnitt durch die Domöffnung zur Arretierung des Befestigungselementes an dem Federbeindom hintergreift. Das Rastelement ist vorzugsweise an dem zylinderförmigen Abschnitt des Befestigungselementes angeordnet und liegt im entspannten Zustand auf einem Durchmesser, der größer ist als der Durchmesser der Domöffnung, so dass es in die Domöffnung eingebracht durch Federkraft in seine Ausgangslage zurück gelangt, um den Kuppelabschnitt zu hintergreifen. Dadurch ist ein einfaches Aufstecken beziehungsweise Einstecken des Befestigungselementes in die Domöffnung gewährleistet, wodurch die Montage der Vorrichtung schnell und einfach durchzuführen ist.

Gemäß einer alternativen Ausführungsform der Erfindung ist vorgesehen, dass das Befestigungselement als Befestigungsflansch ausgebildet ist, der ein kreisförmiges oder kreisringsegmentförmiges Auflageelement aufweist, das auf einem ebenen Kuppelabschnitt des Federbeindoms zumindest im Wesentlichen koaxial zur Längsachse des Federbeindoms angeordnet ist. Durch den kreisringförmigen oder kreisringsegmentförmigen Auflageflansch wird eine große Auflagefläche auf dem Federbeindom gewährleistet, wodurch besonders hohe Kräfte auf den Federbeindom übertragen werden und eine Dämpfung der Vibration optimiert wird. Der Befestigungsflansch ist bevorzugt durch eine Verschraubung oder durch eine oder mehrere Schweißstellen mit dem Federbeindom verbunden. Zweckmäßigerweise weist der Befestigungsflansch eine Befestigungslasche auf, die in einem Winkel zu dem Auflageelement ausgerichtet ist, und an welchem die Wischeranlage oder der Wischeranlagenantrieb insbesondere mittels Verschweißen oder Verschrauben befestigbar ist.

Vorzugsweise weist das Befestigungselement einen der Befestigung der Wischeranlage beziehungsweise des Wischeranlagenantriebs dienenden Befestigungsbolzen auf, oder ist als entsprechender Befestigungsbolzen ausgebildet. Der Befestigungsbolzen stellt ein kostengünstiges Bauteil dar, das auf einfache Art und Weise zur Befestigung der Wischeranlage genutzt werden kann. Der Befestigungsbolzen ist insbesondere vorteilhaft zur Ausrichtung and Arretierung der Wischeranlage beziehungsweise des Wischeranlagenantriebs zumindest in radialer Richtung (bezüglich des Befestigungsbolzens gesehen) geeignet. Gemäß einer vorteilhaften Weiterbildung der Erfindung ist vorgesehen, dass die Wischeranlage ein elastisch verformbares Kupplungselement aufweist, das zur Befestigung auf den Befestigungsbolzen, insbesondere mit Erzeugung einer Presspassung, aufschiebbar ist. Die Wischeranlage, insbesondere der Wischeranlagenantrieb, kann somit durch einfaches Aufstecken des Kupplungselementes auf den Befestigungsbolzen an dem Befestigungselement beziehungsweise an dem Federbeindom des Fahrzeugs befestigt werden. Durch die Steckverbindung wird einerseits eine einfache Montage der Vorrichtung gewährleistet, andererseits ermöglicht die Vorrichtung bei geeigneter Dimensionierung der Steckverbindung, dass bei einem Crash die Steckverbindung auf einfache Art und Weise gelöst werden kann. Durch die Elastizität des Kupplungselementes wird nämlich erreicht, dass sich bei geeigneter Auslegung der Steckverbindung die Wischeranlage beziehungsweise der Wischeranlagenantrieb im Crashfall von dem Befestigungselement und damit von dem Federbeindom lösen kann, und im Sinne der Fahrzeugsicherheit eine nachgebende Struktur bildet, die insbesondere die Sicherheit im Falle eines Fußgängercrashes weiter verbessert. Durch die elastische Ausbildung des Kupplungselements wird darüber hinaus eine weitere Dämpfung der von der Wischeranlage erzeugten Vibrationen erreicht, so dass diese bereits im verringerten Maße auf den Federbeindom übertragen werden.

Besonders bevorzugt ist hierzu vorgesehen, dass der Befestigungsbolzen in wenigstens einem Axialabschnitt eine Durchmesserverjüngung aufweist, in welche das Kupplungselement zur Bildung einer Rastverbindung eingreift. Die Rastverbindung sichert auf einfache Art und Weise, dass sich die Wischeranlage beziehungsweise der Wischeranlagenantrieb nicht unerwünscht von dem Befestigungselement löst. Die Durchmesserverjüngung des Befestigungsbolzens bildet dabei zusammen mit dem Kupplungselement einen Hintergriff, der durch elastische Verformung des Kupplungselementes lösbar und herstellbar ist.

Bevorzugt ist vorgesehen, dass der Befestigungsbolzen an einem freien Ende ein Kugelelement aufweist. Dieses Kugelelement dient einerseits dazu, dass der Befestigungsbolzen einfach in das Kupplungselement einführbar ist, und andererseits wird durch das Kugelelement auf einfache Art und Weise die Durchmesserverjüngung an dem Befestigungsbolzen realisiert.

Gemäß einer vorteilhaften Weiterbildung der Erfindung ist vorgesehen, dass das Kupplungselement eine Aufnahme für den Befestigungsbolzen aufweist, deren Kontur zumindest abschnittsweise zumindest im Wesentlichen der Kontur des Befestigungsbolzens entspricht. Dadurch wird zum einen auf einfache Art eine Presspassung zwischen Befestigungsbolzen und Kupplungselement zumindest abschnittsweise realisiert und zum anderen wird insbesondere bei Vorsehen der Durchmesserverjüngung die zuvor beschriebene Rastverbindung erreicht. Weiterhin wird durch die Anpassung der Konturen aneinander gewährleistet, dass das Kupplungselement formschlüssig fest und insbesondere spielfrei auf dem Befestigungsbolzen sitzt, so dass die Wischeranlage sicher an dem Federbeindom befestigbar ist.

Gemäß einer bevorzugten Ausbildung der Erfindung ist vorgesehen, dass die Aufnahme einen kegelförmigen Einführabschnitt für den Befestigungsbolzen aufweist. Dadurch wird eine einfache Zentrierung und Montage des Kupplungselementes auf dem Befestigungsbolzen gewährleistet. Hierzu ist die Kegelform des Einführabschnitts zweckmäßigerweise derart ausgerichtet, dass sich die Aufnahme in Richtung des Befestigungsbolzens aufweitet beziehungsweise in Einführrichtung verjüngt.

Im Folgenden soll die Erfindung anhand der Zeichnung näher erläutert werden. Dazu zeigen:
- Figur 1: ein nicht erfindungsgemäßes erstes Ausführungsbeispiel einer Vorrichtung zum Befestigen eines Wischerantriebs an einem Fahrzeug,
- Figur 2: die Vorrichtung in einer Detailansicht,
- Figur 3: ein zweites Ausführungsbeispiel der Vorrichtung in einer perspektivischen Darstellung,
- Figur 4: die Vorrichtung gemäß dem zweiten Ausführungsbeispiel in einer Schnittdarstellung und
- Figur 5: ein nicht erfindungsgemäßes drittes Ausführungsbeispiel der Vorrichtung in einer Teilschnittdarstellung.

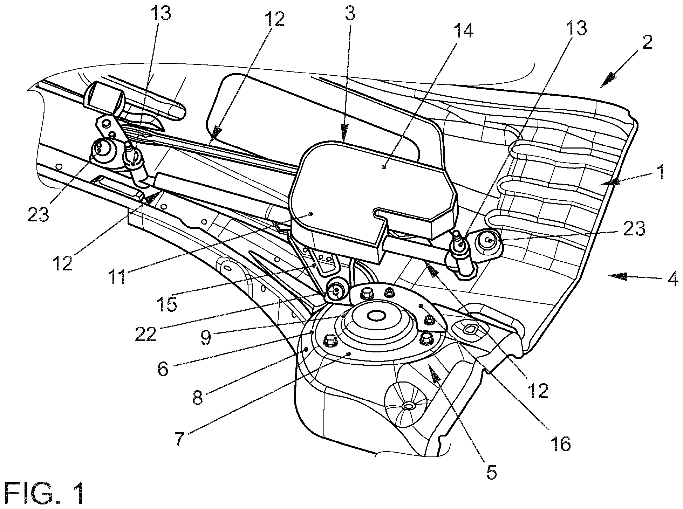

Figur 1 zeigt in einer perspektivischen Teildarstellung die Karosserie 1 eines hier nicht näher dargestellten Fahrzeugs 2 sowie eine an der Karosserie befestigte Wischeranlage 3.

Die Karosserie 1 weist einen Scheibenträger auf, der sich als Querträger 4 über die Fahrzeugbreite erstreckt. Weiterhin weist die Karosserie einen Federbeindom 5 auf, der zur Aufnahme und Lagerung eines Federbeinsystems des Fahrzeugs 2 dient. Der Federbeindom 5 weist dabei einen Kuppelabschnitt 6 auf. Der Kuppelabschnitt 6 schließt den Federbeindom 5 nach oben hin ab und ist im Wesentlichen kuppelförmig ausgebildet. Die Kuppelform ist dabei zweistufig vorgesehen, wobei zwischen den Kuppelstufen ein Kreisringabschnitt 7 gebildet ist, der als im Wesentlichen ebene Auflagefläche dient. An seinem Außenrand geht der Kreisringabschnitt 7 in einen unten liegenden Kuppelbereich 8 über und an seinem Innenrand in einen oben liegenden Kuppelbereich 9. Der Kuppelbereich 9 weist mittig eine Domöffnung 10 auf, die kreisförmig ausgebildet ist. Der Federbeindom 5 beziehungsweise der Kuppelabschnitt 6 ist aus einem Stahlblech gebildet und weist insofern eine geringe Dicke auf. Der Kuppelabschnitt 6 ist somit insgesamt im Wesentlichen hohl zur Aufnahme des Federbeinsystems ausgebildet.

Die Wischeranlage 3 weist einen Wischeranlagenantrieb 11 auf, der über ein Gestänge 12 mit Abtriebswellen 13 verbunden ist, die mit jeweils einem Wischerblatt verbindbar sind. Das Gestänge 12 ist an zwei Punkten mit dem Querträger 4, insbesondere durch Verschraubung mit Schrauben 23 verbunden. Der Wischeranlagenantrieb 11 weist einen Wischermotor mit einem Gehäuse 14 auf, an welchem ein Befestigungsflansch 15 angeordnet ist. Der Befestigungsflansch 15 ist insbesondere einstückig mit dem Gehäuse 14 ausgebildet. Der Befestigungsflansch 15 bildet insofern einen Bestandteil der Wischeranlage 3 beziehungsweise des Wischeranlagenantriebs 11.

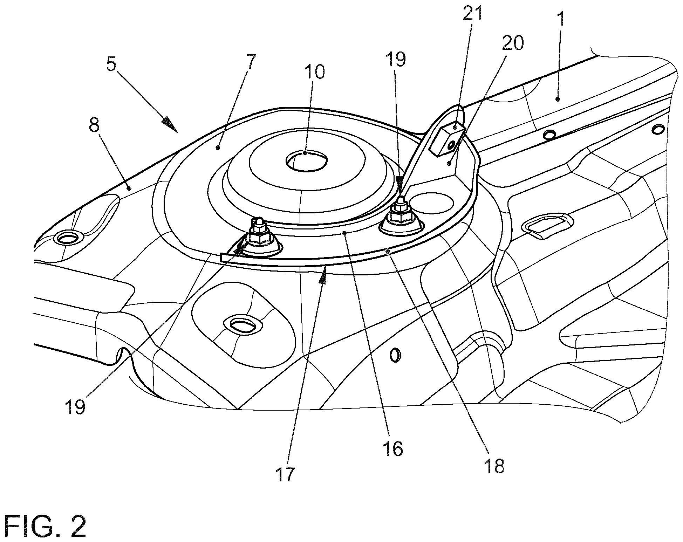

Figur 2 zeigt eine vergrößerte Detailansicht des Federbeindoms 5 der Karosserie 1 aus einem anderen Blickwinkel. Auf dem Abschnitt 7 ist ein Befestigungselement 16 angeordnet. Das Befestigungselement 16 ist als Befestigungsflansch 17 ausgebildet, der ein kreisringsegmentförmiges Auflageelement 18 aufweist, dessen Kontur der Kontur des Abschnitts 17 entspricht, um flächig auf diesem koaxial zur Längsachse des Federbeindoms 5 aufzuliegen. Das Auflageelement 18 ist durch eine Verschraubung mit zwei Schrauben 19 auf dem Abschnitt 7 des Federbeindoms 5 befestigt. An einem Ende des Auflageelements 18 ist eine Befestigungslasche 20 einstückig mit dem Auflageelement 18 ausgebildet. Die Befestigungslasche 20 ragt in einem Winkel von etwa 80° in die Höhe - von dem Auflageelement 18 aus gesehen - und trägt ein Gewindeelement 21 zur Aufnahme einer Schraube 22, mittels welcher der Befestigungsflansch 15 an dem Befestigungsflansch 17 befestigbar ist.

Der Wischeranlagenantrieb 11 wird somit direkt an dem Federbeindom 5 mittels des Befestigungselementes 16 befestigt. Und das Befestigungselement 16 ist nur mit dem Wischeranlagenantrieb 11 und mit dem Federbeindom 5 verbunden, so dass von dem Wischeranlagenantrieb 11 ausgehende Vibrationen direkt in den Federbeindom 5 übertragen werden, wodurch eine Übertragung auf andere Karosserieteile des Fahrzeugs 2 vermieden und eine Geräuschentwicklung vermindert wird.

Der Federbeindom 5 und das Befestigungselement 16 bilden somit eine Vorrichtung 24 zum Befestigen der Wischeranlage 3 an dem Fahrzeug 2.

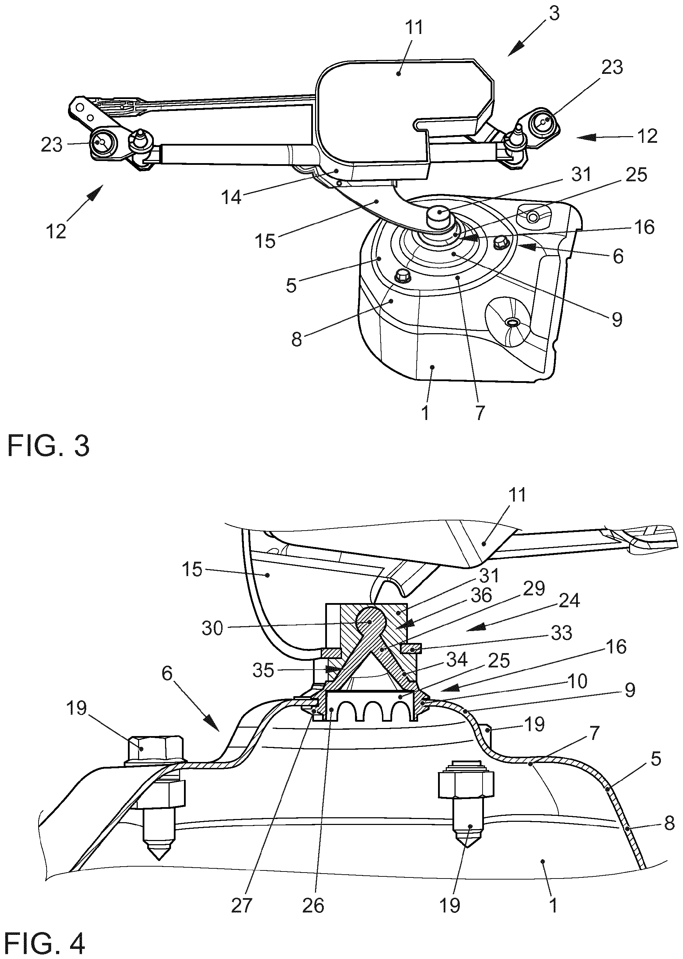

Figuren 3 und 4 zeigen ein zweites Ausführungsbeispiel der Vorrichtung 24 in einer perspektivischen Darstellung (Figur 3) und in einer Schnittdarstellung (Figur 4).

Aus den vorhergehenden Figuren bereits bekannte Elemente sind mit den gleichen Bezugszeichen versehen, so dass insofern auf die oben stehende Beschreibung verwiesen wird. Im Folgenden soll im Wesentlichen nur auf die Unterschiede eingegangen werden.

Gemäß dem zweiten Ausführungsbeispiel ist das Befestigungselement 16 als Befestigungsclip 25 ausgebildet.

Der Befestigungsclip 25 weist einen kreisringförmigen Abschnitt 26 auf, dessen Außendurchmesser im Wesentlichen dem Innendurchmesser der Domöffnung 10 entspricht, so dass das Befestigungselement 25 mit dem Abschnitt 26 in die Domöffnung 10 eingeführt werden kann, wie in Figur 4 dargestellt. Der Befestigungsclip 25 ersetzt somit eine sonst üblicherweise vorgesehene Abdeckkappe. Dabei weist der Abschnitt 26 an seinem freien Ende an seiner Außenseite Rastelemente 27 auf, die als Rastanasen ausgebildet und über den Umfang des Abschnitts 26 verteilt, insbesondere gleichmäßig verteilt, angeordnet sind. Die Rastelemente 27 und/oder der Abschnitt 26 sind bereichsweise elastisch verformbar, so dass beim Einführen in die Domöffnung 10 die Rastelemente 27 radial nach innen gedrängt werden, um anschließend aufgrund der Eigenelastizität wieder in ihre Ursprungslage verbracht zu werden, in welcher sie den Kuppelabschnitt 6 des Federbeindoms 5 wie dargestellt hintergreifen, so dass der Befestigungsclip 25 nicht mehr entgegen der Einführrichtung herausgezogen werden kann. Beabstandet zu den Rastnasen 27 weist der Befestigungsclip 25 einen Axialanschlag 28 auf, dessen Außendurchmesser größer ist als der der Domöffnung 10, so dass der Befestigungsclip 25 nur bis zu dem Axialanschlag 28 in die Domöffnung 10 einführbar ist. Er liegt somit axial auf dem Kuppelabschnitt 6 auf. Der Abstand zwischen dem Axialanschlag 28 und den Rastnasen 27 ist dabei bevorzugt derart gewählt, dass das Befestigungselement 25 im eingesetzten Zustand im Wesentlichen axial spielfrei an dem Federbeindom 5 gehalten ist.

Auf der dem Federbeindom 5 abgewandten Seite weist der Befestigungsclip 25 einen Befestigungsbolzen 29 auf, der in einem ersten Abschnitt eine kegelförmige Außenkontur und an seinem freien Ende, in einem zweiten Abschnitt eine Kugelform zum Bilden eines Kugelelements 30 aufweist.

Die Wischeranlage 3 weist an ihrem Befestigungsflansch 15 ein elastisch verformbares Kupplungselement 31 auf, das in eine Öffnung 32 des Befestigungsflansches 15 eingeclipst ist. Dazu weist das Kupplungselement 31 eine Durchmesserverjüngung 33 auf, in welche der Befestigungsflansch 15 insbesondere vollumfänglich eingreift, da der Durchmesser der Öffnung 32 zumindest im Wesentlichen dem Durchmesser der Durchmesserverjüngung 33 entspricht. In dem vorliegenden Ausführungsbeispiel weist das Kupplungselement 31 auf einer Seite der Durchmesserverjüngung 33 einen Abschnitt mit einem ersten Durchmesser und auf der anderen Seite einen Abschnitt mit einem Durchmesser auf, der größer ist als der des ersten Abschnitts. Der zweite Abschnitt ist dabei dem Befestigungsclip 25 zugewandt. Das Kupplungselement 31 weist eine Aufnahmeaussparung 34 auf, deren Kontur im Wesentlichen der Außenkontur des Befestigungsbolzens 29 und sich im Wesentlichen durch das Kupplungselement 31 hindurch erstreckt entspricht. Die Aufnahmeaussparung 34 weist einen kegelförmigen Einführabschnitt 35 auf, der die Montage der Vorrichtung 24 erleichtert.

Bei der Montage wird die Wischeranlage 3 mit dem Kupplungselement 31 auf dem Befestigungsbolzen 29 aufgeschoben. Aufgrund des kegelförmigen Einführabschnitts 35 erfolgt eine automatische Zentrierung des Befestigungsbolzens 29. Der Befestigungsbolzen 29 wird so weit in die Aufnahmeaussparung 34 eingeführt, bis er vollständig darin aufgenommen ist. Da die Konturen der Aufnahmeaussparung 34 und des Befestigungsbolzens 29 einander entsprechen, dringt das Kupplungselement 31 in die zwischen Kugelelement 30 und dem ersten Abschnitt des Befestigungsbolzens 29 gebildete Durchmesserverjüngung ein, wodurch eine Rastverbindung zwischen dem Kupplungselement 31 und dem Befestigungsbolzen 29 gebildet wird.

Zweckmäßigerweise ist die Aufnahmeaussparung 34 derart ausgebildet, dass im montierten Zustand das Kugelelement 30 in dem von dem Federbeindom 5 abgewandten Abschnitt des Kupplungselements 31, also jenseits der Öffnung 32 des Befestigungsflansches 15 liegt. Dadurch muss beim Einführen das Kugelelement 30 auch den schmalen Bereich des Kupplungselementes 31 in der Öffnung 32 durchdringen, wodurch die Haltekraft insgesamt erhöht wird.

Im Betrieb, insbesondere bei einem Crash, wenn die Wischeranlage 3 belastet wird und strukturell zurückgedrängt werden soll, löst sich das Kupplungselement 31 bei einer entsprechend hohen Kraftbeaufschlagung von dem Befestigungsbolzen 29, indem die Rastverbindung 36 gelöst wird. Da der Befestigungsclip 25 mittels der Rastnasen 27 an dem Federbeindom 5 gehalten ist, lässt sich dieser nicht von dem Federbeindom 5 lösen. Die vorteilhafte Ausbildung des Kupplungselements 31 erlaubt jedoch ein sicheres Entfernen des Wischeranlagenantriebs 11 von dem Federbeindom 5.

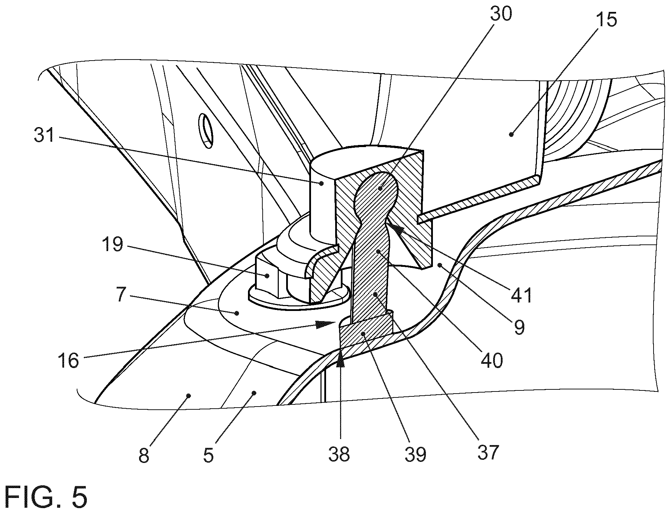

Figur 5 zeigt in einer weiteren Teilschnittdarstellung ein drittes Ausführungsbeispiel der Vorrichtung 24. Aus Figur 4 bereits bekannte Elemente sind mit den gleichen Bezugszeichen versehen, so dass insofern auf die oben stehende Beschreibung verwiesen wird.

Im Unterschied zu dem vorhergehenden Ausführungsbeispiel ist nunmehr vorgesehen, dass das Befestigungselement 16 als Befestigungsbolzen 37 ausgebildet ist, der auf dem Federbeindom 5, insbesondere durch Widerstandsschweißen, festgeschweißt, ist. Entsprechend ist eine Schweißstelle 38 zwischen dem Befestigungsbolzen 37 und dem Kuppelabschnitt 6 vorgesehen. Der Befestigungsbolzen 37 weist dazu an seinem dem Federbeindom 5 zugewandten Ende einen verbreiterten Fußabschnitt 39 auf. An diesen schließt sich, von dem Federbeindom 5 abgewandt, ein zylinderförmiger Bolzenabschnitt 40 an, an dessen freien Ende das bereits bekannte Kugelelement 30 angeordnet ist, wobei zwischen dem Kugelelement 30 und dem Abschnitt 40 eine Durchmesserverjüngung 41 gebildet ist, in welche wiederum Material des elastisch verformbaren Kupplungselements 32 zum Bilden der Rastverbindung 36 eingreift. Auch hier bildet der kegelförmige Einführabschnitt 35 eine vorteilhafte Einführhilfe bei der Montage der Vorrichtung 24. Ebenso wird hier aufgrund der elastischen Verformbarkeit des Kupplungselementes 31 ein Lösen der Wischeranlage 3 von dem Federbeindom 5 im Notfall gewährleistet. Die Montage und Demontage erfolgt dabei ohne zusätzliches Werkzeug.

Das Kupplungselement 31 gewährleistet darüber hinaus aufgrund seiner elastischen Verformbarkeit eine Dämpfung von der Wischeranlage erzeugten Vibrationen, so dass die auf den Federbeindom 5 übertragenen Vibrationen von vornherein gedämpft übertragen werden. Durch die lösbaren Rastverbindungen gemäß des zweiten und des dritten Ausführungsbeispiels werden die Wischeranlage 3 sowie der Federbeindom 5 vor irreversibler Beschädigung geschützt.

## Patentansprüche

1. Anordnung einer Wischeranlage (3) an einem Fahrzeug (2), insbesondere Kraftfahrzeug, mit einer Vorrichtung (24) zum Befestigen der Wischeranlage (3), insbesondere eines Wischeranlagenantriebs (11), an dem Fahrzeug (2) mit mindestens einem Befestigungselement (16) und mit mindestens einem Federbeindom (5), wobei die Wischeranlage (3) durch das Befestigungselement (16) an einem Kuppelabschnitt (6) des Federbeindoms (5) befestigt ist, wobei das Befestigungselement (16) nur mit dem Federbeindom (5) und mit der Wischeranlage (3) verbunden ist, **dadurch gekennzeichnet, dass** der Federbeindom (5) in einem Kuppelabschnitt (6) eine insbesondere mittige Domöffnung (10) aufweist, dass das Befestigungselement (16) bereichsweise auf dem Kuppelabschnitt (6) aufliegt, bereichsweise in der Domöffnung (10) angeordnet ist und wenigstens ein Rastelement (27) aufweist, welches den Kuppelabschnitt (6) zur Arretierung des Befestigungselementes (16) an dem Federbeindom (5) durch die Domöffnung (10) hintergreift.

2. Anordnung nach Anspruch 1, **dadurch gekennzeichnet, dass** das Befestigungselement (16) als Befestigungsflansch (17) ausgebildet ist, der ein kreisringförmiges oder kreisringsegmentförmiges Auflageelement (18) aufweist, das auf einem ebenen Kuppelabschnitt (7) des Federbeindoms (5) zumindest im Wesentlichen koaxial zur Längsachse des Federbeindoms (5) angeordnet ist.

3. Anordnung nach einem der vorhergehenden Ansprüche, **dadurch gekennzeichnet, dass** das Befestigungselement (16) einen der Befestigung der Wischeranlage (3) dienenden Befestigungsbolzen (29) aufweist oder als Befestigungsbolzen (37) ausgebildet ist.

4. Anordnung nach Anspruch 3, **dadurch gekennzeichnet, dass** die Wischeranlage (3) ein elastisch verformbares Kupplungselement (31) aufweist, das zur Befestigung der Wischeranlage (3) auf den Befestigungsbolzen (29,37), insbesondere mit Erzeugung einer Presspassung, aufschiebbar ist.

5. Anordnung nach einem der Ansprüche 3 oder 4, **dadurch gekennzeichnet, dass** der Befestigungsbolzen (29,37) in wenigstens einem Axialabschnitt eine Durchmesserverjüngung (33,41) aufweist, in welche das Kupplungselement zur Bildung einer Rastverbindung (36) eingreift.

6. Anordnung nach einem der Ansprüche 3 bis 5, **dadurch gekennzeichnet, dass** der Befestigungsbolzen (29,37) an einem freien Ende ein Kugelelement (30) aufweist.

7. Anordnung nach einem der Ansprüche 3 bis 6, **dadurch gekennzeichnet, dass** das Kupplungselement (31) eine Aufnahme (34) für den Befestigungsbolzen (29,37) aufweist, deren Kontur zumindest abschnittsweise zumindest im Wesentlichen der Kontur des Befestigungsbolzens (29,37) entspricht.

8. Anordnung nach Anspruch 7, **dadurch gekennzeichnet, dass** die Aufnahme (34) einen kegelförmigen Einführabschnitt (35) für den Befestigungsbolzen (29,37) aufweist.

## Claims

1. An arrangement of a wiper system (3) on a vehicle (2), in particular a motor vehicle, having a device (24) for fastening the wiper system (3), in particular a wiper system drive (11), on the vehicle (2) with at least one fastening element (16) and with at least one suspension strut dome (5), wherein the wiper system (3) is fastened by the fastening element (16) to a dome portion (6) of the suspension strut dome (5), wherein the fastening element (16) is only connected to the suspension strut dome (5) and to the wiper system (3), **characterized in that** the suspension strut dome (5) in a dome portion (6) has an especially central dome opening (10), that the fastening element (16) rests in regions on the dome portion (6), is arranged in regions in the dome opening (10) and has at least one latching element (27), which engages the dome portion (6) behind for locking the fastening element (16) on the suspension strut dome (5) through the dome opening (10).

2. The arrangement according to Claim 1, **characterized in that** the fastening element (16) is configured as a fastening flange (17), which has a circular ring-shaped or circular ring segment-shaped resting element (18), which is arranged on a flat dome portion (7) of the suspension strut dome (5) at least substantially coaxially to the longitudinal axis of the suspension strut dome (5).

3. The arrangement according to any one of the preceding claims, **characterized in that** the fastening element (16) has a fastening bolt (29) serving for fastening the wiper system (3) or is configured as a fastening bolt (37).

4. The arrangement according to Claim 3, **characterized in that** the wiper system (3) has an elastically deformable coupling element (31), which can be slid onto the fastening bolt (29, 37), in particular by generating a press fit, for fastening the wiper system (3).

5. The arrangement according to any one of Claims 3 or 4, **characterized in that** the fastening bolt (29, 37) in at least one axial portion has a diameter tapering (33, 41), into which the coupling element engages to form a latching connection (36).

6. The arrangement according to any one of Claims 3 to 5, **characterized in that** the fastening bolt (29, 37) has a spherical element (30) on a free end.

7. The arrangement according to any one of Claims 3 to 6, **characterized in that** the coupling element (31) has a housing (34) for the fastening bolt (29, 37), the outline of which at least substantially corresponds at least in portions to the outline of the fastening bolt (29, 37).

8. The arrangement according to Claim 7, **characterized in that** the housing (34) has a cone-shaped insertion portion (35) for the fastening bolt (29, 37).

## Revendications

1. Disposition d'une installation d'essuie-glaces (3) sur un véhicule (2), plus particulièrement un véhicule automobile, avec un dispositif (24) pour la fixation de l'installation d'essuie-glaces (3), plus particulièrement d'un entraînement d'essuie-glaces (11), sur le véhicule (2) avec au moins un élément de fixation (16) et avec au moins un dôme d'amortisseur (5), l'installation d'essuie-glaces (3) étant fixée grâce à l'élément de fixation (16) à une portion de coupole (6) du dôme d'amortisseur (5), l'élément de fixation (16) étant relié uniquement avec le dôme d'amortisseur (5) et avec l'installation d'essuie-glaces (3), **caractérisée en ce que** le dôme d'amortisseur (5) comprend, dans une portion de coupole (6), une ouverture de dôme (10) plus particulièrement centrale, **en ce que** l'élément de fixation (16) repose en partie sur la portion de coupole (6), est disposé en partie dans l'ouverture du dôme (10) et comprend au moins un élément d'encliquetage (27) qui s'accroche par-derrière la portion de coupole (6) pour le blocage de l'élément de fixation (16) sur le dôme d'amortisseur (5) à travers l'ouverture du dôme (10).

2. Disposition selon la revendication 1, **caractérisée en ce que** l'élément de fixation (16) est conçu comme une bride de fixation (17) qui comprend un élément d'appui (18) annulaire ou en forme de segment annulaire, qui est disposé sur une portion de coupole (7) plane du dôme d'amortisseur (5) de manière au moins globalement coaxiale par rapport à l'axe longitudinal du dôme d'amortisseur (5).

3. Disposition selon l'une des revendications précédentes, **caractérisée en ce que** l'élément de fixation (16) comprend une tige de fixation (29) permettant la fixation de l'installation d'essuie-glaces (3) ou est conçu comme une tige de fixation (37).

4. Disposition selon la revendication 3, **caractérisée en ce que** l'installation d'essuie-glaces (3) comprend un élément de couplage (31) déformable élastiquement qui peut être poussé, pour la fixation de l'installation d'essuie-glaces (3), sur la tige de fixation (29, 37), plus particulièrement en créant un ajustement par pression.

5. Disposition selon l'une des revendications 3 ou 4, **caractérisée en ce que** la tige de fixation (29, 37) présente, dans au moins une portion axiale, un rétrécissement de diamètre (33, 41) dans lequel l'élément de couplage s'emboîte pour la formation d'une liaison d'encliquetage (36).

6. Disposition selon l'une des revendications 3 à 5, **caractérisée en ce que** la tige de fixation (29, 37) comprenant, à une extrémité libre, un élément sphérique (30).

7. Disposition selon l'une des revendications 3 à 6, **caractérisée en ce que** l'élément de couplage (31) comprend un logement (34) pour la tige de fixation (29, 37) dont le contour correspondant au moins partiellement globalement au contour de la tige de fixation (29, 37).

8. Disposition selon la revendication 7, **caractérisée en ce que** le logement (34) comprend une portion d'insertion (35) de forme conique pour la tige de fixation (29, 37).
